# EUROPEAN PATENT APPLICATION

(11) **EP 1 387 466 A1**
(43) Date of publication of application: **04.02.2004**
(21) Application number: 03291619.9
(22) Date of filing: 01.07.2003
(51) Int. Cl.: H02K 11/00, E05F 15/00

(54) **Window lifter geared motor assembly and window lifter**

(30) Priority: 30.07.2002 FR 0209683
(71) Applicant: ArvinMeritor Light Vehicle Systems-France, 45600 Sully sur Loire (FR)
(72) Inventor: Fournier, Gérard, 14123 IFS (FR)
(74) Representative: Cabinet Hirsch

(57) **Abstract**

The invention relates to a window lifter geared motor assembly (1) comprising,
- a drive shaft (5),
- a reduction gearset (7) rotationally driven by the drive shaft,
- a sensor (8) the state of which is a function of the distance (23) between the gearset (7) and the drive shaft (5).

The invention also relates to a window lifter comprising such a geared motor assembly.

The invention has the advantage of unambiguously detecting trapping likely to occur in a window lifter when an object, and particularly a hand, impedes the operation of the window.

## Description

The present invention relates to a window lifter geared motor assembly and to a window lifter comprising such a geared motor assembly.

Numerous motor vehicle equipment items are operated using geared motor assembly electric motors. For example, window lifter windows are increasingly often driven by these electric motors. It is possible for an object or somebody's hand to lie accidentally in the closure path of the window and become trapped between the top edge of the window and the surround in the door. This may give rise to various types of damage or injury. Various devices for forcing the window to be lowered are known.

Thus, document US-A-5 296 658 uses window seals containing capacitances or optical fibres. The characteristics of these seals are modified when an object is trapped, and this provides a trapping signal that acts on the drive to the window. However, these seals are, on the one hand, expensive and, on the other hand, they are detrimental to the aesthetics of the vehicle because they are bulky and visible.

Document DE-A-3 034 114 proposes to measure the rotational speed of the electric motor. Document DE-A-4 442 171 proposes measuring the electric current of this motor. However, these methods have disadvantages. Because of the characteristics of the electric motor, particularly its inertia, its resistance or its flux, there is a relatively long response time between the trapping of an object and the detection of this trapping. The force driving the window may, in the meantime, increase appreciably and cause injury. The trapping force may also exceed the levels defined in the standards, making vehicle homologation difficult.

There is therefore a need for a geared motor assembly able to solve the problem of detecting trapping in window lifters.

For that, the invention proposes a window lifter geared motor assembly comprising,
- a drive shaft,
- a reduction gearset rotationally driven by the drive shaft,
- a sensor, the state of which is a function of the separation between the gearset and the drive shaft.

According to one embodiment, the gearset may be rotationally driven about a shaft, the shaft being guided with respect to the casing by a bearing on which the sensor is placed.

According to one embodiment, the drive shaft may be guided with respect to the casing by a bearing on which the sensor is placed.

Advantageously, the driving of the drive shaft may be a function of the state of the sensor. The sensor may be a piezoresistive sensor.

According to another embodiment, the geared motor assembly may further comprise
- an electric motor rotationally driving the drive shaft, the electric motor being in a casing
- a damper damping the movements of the electric motor in the casing.

For example, the damper may be a spring between the casing and the electric motor.

The invention also relates to a window lifter comprising the geared motor assembly as described hereinabove.

Other features and advantages of the invention will become apparent from reading the detailed description that follows of some embodiments of the invention given solely by way of example and with reference to the drawings, which show:
- Figure 1, a geared motor assembly according to the invention, in section;
- Figure 2, a view from above of the geared motor assembly of Figure 1;
- Figure 3 a front view of the geared motor assembly of Figure 1.

The invention relates to a window lifter geared motor assembly comprising a drive shaft driving a reduction gearset and a sensor, the state of which is a function of the separation between the drive shaft and the gearset. When the gearset is blocked in its rotation because of the presence of an object across the path of the window, the force developed by the geared motor assembly to overcome the presence of this obstacle is proportional to the force that causes the increase in separation. By detecting the increase in separation, the sensor is able unambiguously to detect the trapping.

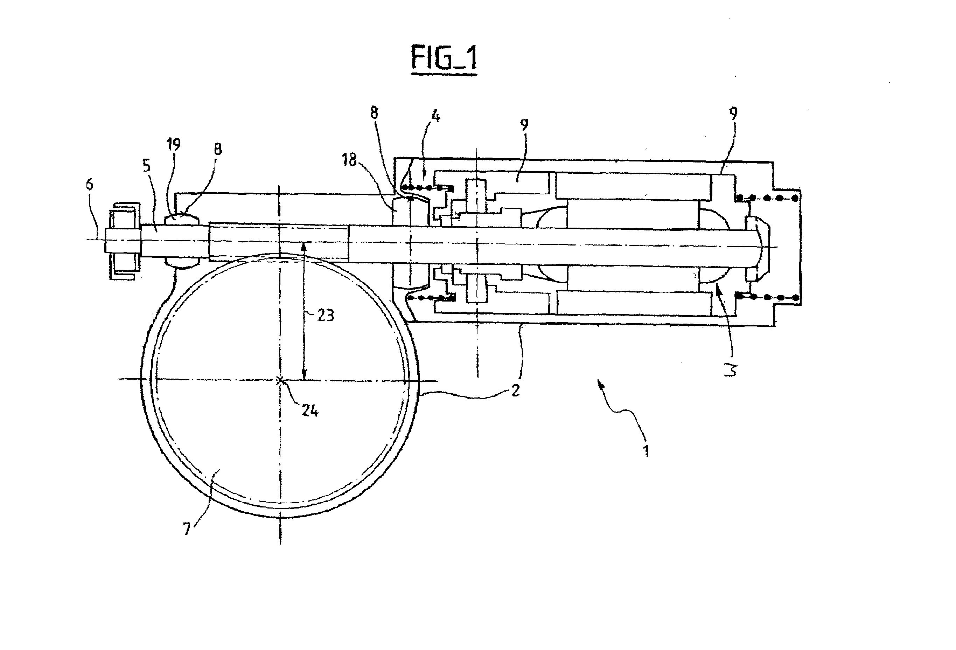

Figure 1 is a view in section of a geared motor assembly according to one exemplary embodiment. The geared motor assembly 1 comprises an electric motor 3 in a casing 2, rotationally driving a drive shaft 5 via a rotor and a stator. The drive shaft 5 is rotationally driven about its axis 6. The drive shaft rotationally drives a reduction gearset 7.

The connection between the drive shaft 5 and the reduction gearset 7 is, for example, a worm and wheel connection; the gearset 7 is a toothed wheel rotationally driven by a screw thread on the drive shaft 5. The gearset 7 is rotationally driven about its axis 20. The axis 20 of the gearset 7 and the axis 6 of the drive shaft 5 are orthogonal. In the worm and wheel connection, the tooth separation force is one of the components of the forces involved in the driving of the wheel by the worm. It is proportional to the torque developed by the geared motor assembly. The tooth separation force is in a direction orthogonal to the axis 6 and to the axis 20. It is manifested in an increase in separation 23 between the two axes 6 and 20.

The sensor 8 is able to detect the tooth separation force. The sensor 8 thus makes it possible to detect the forces applied at output to the reduction gearset. As long as the separation 23 between the axes 16 and 20 remains within a predetermined threshold, the corresponding tooth separation force is that due to the development of a torque representative of normal operation of the geared motor assembly. This corresponds to unimpeded operation of the window lifter. By contrast, when the sensor 8 is in a state indicating an increase in the separation 23 and, in particular, when the state of the sensor 8 indicates that the separation 23 is exceeding the predetermined threshold, the corresponding tooth separation force is that due to the development of an operating torque that is abnormal for the geared motor assembly. The geared motor assembly develops a higher torque to overcome an obstacle impeding the path of the window. The increase in the developed torque increases the separation 23, and this is detected by the sensor 8.

As a preference, the driving of the drive shaft 5 is a function of the state of the sensor 8. Detection by the sensor 8 of the increase in separation 23 and therefore of the crossing of the predetermined threshold of separation of a tooth on the drive shaft 5 and the reduction gearset 7 allows operation of the geared motor assembly to be interrupted. A circuit (not depicted) processing the state of the sensor 8 is able to stop the operation of the electric motor. The advantage is first of all that it prevents the object impeding the path of the window from being trapped. This is particularly advantageous when a finger is in the path of the window, thus avoiding any injury. Another advantage concerns the geared motor assembly itself. When an object impedes the path of the window, the gearset 7 driving a window lifter cable winding drum is blocked in its rotation. The blockage of the gearset 7 may damage the worm and wheel connection. Interrupting the operation of the electric motor 3 therefore makes it possible to protect the link and therefore the geared motor assembly. Another advantage is that the window closure force can be monitored and thus spare the mechanical stops of the window lifter.

Advantageously, the circuit for processing the state of the sensor 8 reverses the operation of the geared motor assembly. That allows the window to be lowered and the object impeding the path of the window to be disentangled.

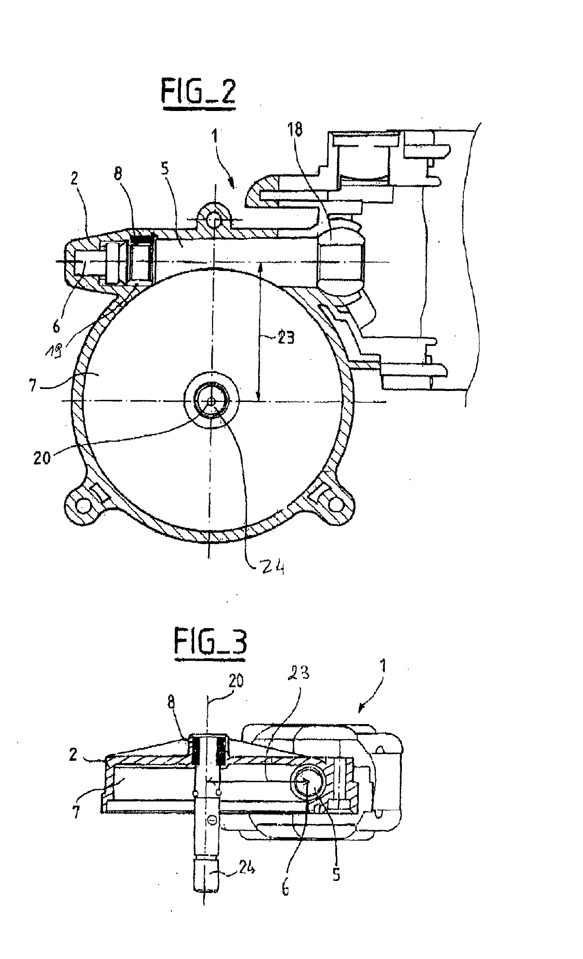

Figures 2 and 3 show various possible locations for the sensor 8 on the geared motor assembly 1.

Advantageously, the sensor 8 is arranged on elements of the geared motor assembly that are not in motion when the geared motor assembly is in operation. The advantage of this is that the sensor can be connected more easily to the circuit for processing the state of the sensor than it could if the sensor 8 were driven back and forth.

Figure 2 is a view from above of the geared motor assembly of Figure 1. In this embodiment, the drive shaft 5 is guided with respect to the casing 2 by the bearings 18 and 19. In Figure 2, the sensor 8 is arranged on the bearing 19 that guides the drive shaft 5. The sensor 8 may also be arranged on the two bearings 18 and 19, thus improving detection of the increase in separation 23. The increase in the separation 23 between the axes 6 and 20 gives rise to a load in the bearings 18 and 19. This load corresponds to the tooth separation force and is detected by the sensor 8.

Figure 3 is a front view of the geared motor assembly of Figure 1. In Figure 3, the reduction gearset 7 is rotationally driven about a shaft 24, the shaft 24 being guided with respect to the casing 2 by a bearing on which the sensor 8 is placed. The increase in the separation 23 between the axes 6 and 20 gives rise to a load in the bearing that guides the shaft 24 in the casing 2. This load that corresponds to the tooth separation force is detected by the sensor 8.

The sensor 8 is also depicted in Figure 1. In this figure, the sensor 8 is on the bearing 18.

The variation in state of the sensor 8 as a function of the separation 23 makes it possible to detect the trapping without having to measure an intermediate parameter such as the rotational speed of the electric motor or to measure the electric current in the motor.

It is possible for example to use a piezoresistive sensor known per se and commercially available, the electrical impedance of which increases in proportion to the load applied to its two faces. It is also possible to use a sensor exhibiting a capacitance, an inductance or more generally an impedance, the value of which varies as a function of the load applied to it. Such a sensor is compact and may have terminals ready for connection. The response time of the sensors is preferably shorter than 25 ms.

Advantageously, the geared motor assembly comprises a damper 4 depicted in Figure 1. The damper 4 damps the movements of the electric motor 3 in the casing 2. The damper 4 prevents damage to the geared motor assembly 1 when it becomes blocked by an object in the path of the window. In particular, the damper makes it possible to avoid the breakage of part of the gearset, such as the meshing teeth. The damper is able to damp the movement of the drive shaft 5 when the reduction gearset 7 is rotationally blocked by the presence of an obstacle. The damper may be placed on one side of the electric motor or the other, depending on the desired direction of damping. As a preference, the damper is on each side of the electric motor.

For unambiguous detection by the sensor 8 of the blocking of a window, it is preferable for the driveline between the obstacle on the window and the sensor 8 to be rigid. The term driveline is to be understood in a window lifter to mean the sequence comprising the window, the slider on the window, the cable, the drum, the gearset, the drive shaft and the electric motor. Instead of the drum and the cable, the window lifter may comprise a pinion and a sector arm. As a preference, the damper 4 is a spring between the casing 2 and the electric motor 3. More specifically, the spring 4 is between the casing 2 and the envelope 9 of the electric motor 3. The advantage is that the rigidity of the driveline is not interrupted. Thus, the presence of the sensor 8 on a bearing guiding the drive shaft 5 or the shaft 24 of the reduction gearset 7 is able quickly and unambiguously to detect the presence of an obstacle in the path of the window.

The invention also relates to a window lifter comprising such a geared motor assembly. All the advantages described hereinabove are repeated in the case of the window lifter. Such a window lifter allows unambiguous detection of the trapping. This allows the window lifter to meet the standards in force.

Of course, the present invention is not limited to the embodiments described by way of example; thus, the geared motor assembly described may be the one used to operate a sunroof. It may also be used to move a car seat. The invention is particularly advantageous when the leg of a rear-seat passenger impedes the sliding of the seat.

## Claims

1. A window lifter geared motor assembly (1) comprising,
- a drive shaft (5),
- a reduction gearset (7) rotationally driven by the drive shaft,
- a sensor (8) the state of which is dependent upon a distance (23) between an axis of the gearset (7) and an axis of the drive shaft (5).

2. The geared motor assembly according to Claim 1, **characterized in that** the reduction gearset (7) is rotationally driven about a shaft (24), the shaft (24) being guided with respect to the casing (2) by a bearing on which the sensor (8) is placed.

3. The geared motor assembly according to Claim 1, **characterized in that** the drive shaft (5) is guided with respect to the casing (2) by a bearing (18, 19) on which the sensor (8) is placed.

4. The geared motor assembly according to one of Claims 1 to 3, **characterized in that** the state of the sensor (8) determines whether the drive shaft (5) is driven.

5. The geared motor assembly according to one of Claims 1 to 4, **characterized in that** the sensor (8) is a piezoresistive sensor.

6. The geared motor assembly according to one of Claims 1 to 5, **characterized in that** it further comprises
- an electric motor (3) rotationally driving the drive shaft (5), the electric motor (3) being in a casing (2)
- a damper (4) damping the movements of the electric motor (3) in the casing (2).

7. The geared motor assembly according to Claim 6, **characterized in that** the damper (4) is a spring between the casing (2) and the electric motor (3).

8. A window lifter comprising a geared motor assembly (1) according to one of the preceding claims.
